Europäisches Patentamt

European Patent Office

Office européen des brevets

(19)

(11) Veröffentlichungsnummer: **0 108 983**
**B1**

(12) # EUROPÄISCHE PATENTSCHRIFT

(45) Veröffentlichungstag der Patentschrift:
19.02.86

(51) Int. Cl.⁴: **A 61 C 17/04**

(21) Anmeldenummer: **83110832.9**

(22) Anmeldetag: **28.10.83**

(54) **Zahnärztliche Absaugeinrichtung.**

(30) Priorität: **15.11.82 DE 3242212**

(43) Veröffentlichungstag der Anmeldung:
**23.05.84 Patentblatt 84/21**

(45) Bekanntmachung des Hinweises auf die Patenterteilung:
**19.02.86 Patentblatt 86/8**

(84) Benannte Vertragsstaaten:
**DE FR GB IT SE**

(56) Entgegenhaltungen:
**EP - A - 0 040 181**
**DE - A - 3 020 433**
**DE - B - 2 342 543**
**DE - B - 2 459 881**
**DE - C - 1 766 167**
**FR - A - 2 463 748**
**GB - A - 237 633**
**US - A - 1 457 053**
**US - A - 3 484 941**
**US - A - 4 321 922**
**US - A - 4 385 891**

(73) Patentinhaber: **Siemens Aktiengesellschaft, Berlin und München Wittelsbacherplatz 2, D-8000 München 2 (DE)**

(72) Erfinder: **Behringer, Wolfgang, Am Flechtenberg 26, D-6140 Bensheim (DE)**
Erfinder: **Kratochwilla, Hans Michael, Ziegelhüttenstrasse 6, D-6143 Lorsch (DE)**

## Beschreibung

Die Erfindung bezieht sich auf eine zahnärztliche Absaugeinrichtung mit einem Auffangbehälter für feste Teilchen, der in einem in das Abwassernetz führenden Abwasserleitungsabschnitt siphonartig angeordnet und zum Zwecke der Entnahme der angesammelten Teilchen dort lösbar gehaltert ist.

Die in der zahnärztlichen Praxis bei Präparationsarbeiten anfallenden festen Teilchen, wie Gold oder Silberamalgam, werden bei bekannten Absaugeinrichtungen (DE-A Nr. 2929804) in einem Auffangbehälter gesammelt, der in gewissen Zeitabständen aus der Einrichtung entnommen, in geeigneter Weise verschlossen und dann zur weiteren Aufbereitung der Materialien einer Scheideanstalt zugeführt wird. Dieser Vorgang ist, insbesondere wenn noch eine zweite Sammelstelle vorhanden ist, relativ umständlich und auch unhygienisch, wenn man bedenkt, dass die Behältnisse nach deren Entnahme aus der Einrichtung offen sind und der Kunde bzw. Servicetechniker selbst einen geeigneten Verschluss vorzusehen hat.

Aufgabe der vorliegenden Erfindung ist es, eine demgegenüber verbesserte zahnärztliche Absaugeinrichtung der eingangs genannten Gattung anzugeben, insbesondere mit dem Ziel, dann, wenn eine weitere Sammelstelle mit einem weiteren Behältnis vorgesehen wird, dieses gemeinsam mit dem zentralen Auffangbehälter zu einer hygienisch sauberen, versandfähigen Einheit auszubilden.

Zur Lösung der Aufgabe wird vorgeschlagen, dass im Abwasserleitungsabschnitt ein weiteres Auffangbehältnis vorgesehen ist, das als Verschlussdeckel für den erstgenannten Auffangbehälter ausgebildet ist, so dass beide Behältnisse zu einer geschlossenen versandfähigen Einheit zusammengefügt werden können. Vorteilhafterweise ist das weitere Auffangbehältnis als siebartiges Filter ausgebildet, welches in an sich bekannter Weise einen etwa rohrförmigen, einseitig geschlossenen Siebkörper enthält, der mit seinem freien Teil in den Abwasserleitungsabschnitt eintaucht und dessen anderer, geschlossener Teil eine Handhabe zur Entnahme des Filters bildet, dass der Siebkörper so dimensioniert ist, dass er im erstgenannten Auffangbehälter Platz findet und die Handhabe einen den Abmessungen des erstgenannten Auffangbehälters angepassten und mit diesem einen Verschluss bildenden Ansatz aufweist.

Mit den vorgeschlagenen Massnahmen können zwei Sammelstellen im Gerät auf einfache und hygienische Weise getauscht und als versandfähige Einheit der Scheideanstalt zur weiteren Aufbereitung der angesammelten Teile zugeführt werden. Die versandfähige Einheit besteht somit aus einem geschlossenen Sammelgefäss, welches zwei Filter enthält, die im Betrieb an getrennter Stelle in einem Gerät angeordnet werden können, z.B. der Deckel mit dem Siebkörper als Vor- oder Grobsieb und der Auffangbehälter für die restlichen anfallenden Teilchen.

Weitere vorteilhafte Ausgestaltungen und Weiterbildungen sind in den weiteren Unteransprüchen enthalten. Anhand der Zeichnung wird ein Ausführungsbeispiel der Erfindung näher erläutert.

Fig. 1: die zahnärztliche Absaugeinrichtung in einer Prinzipdarstellung,

Fig. 2 und 3: Einzelheiten der zwei zu einem geschlossenen Gefäss komplettierbaren Auffangbehältnisse.

Ein Ausführungsbeispiel der Erfindung wird nachfolgend anhand der Zeichnung näher erläutert:

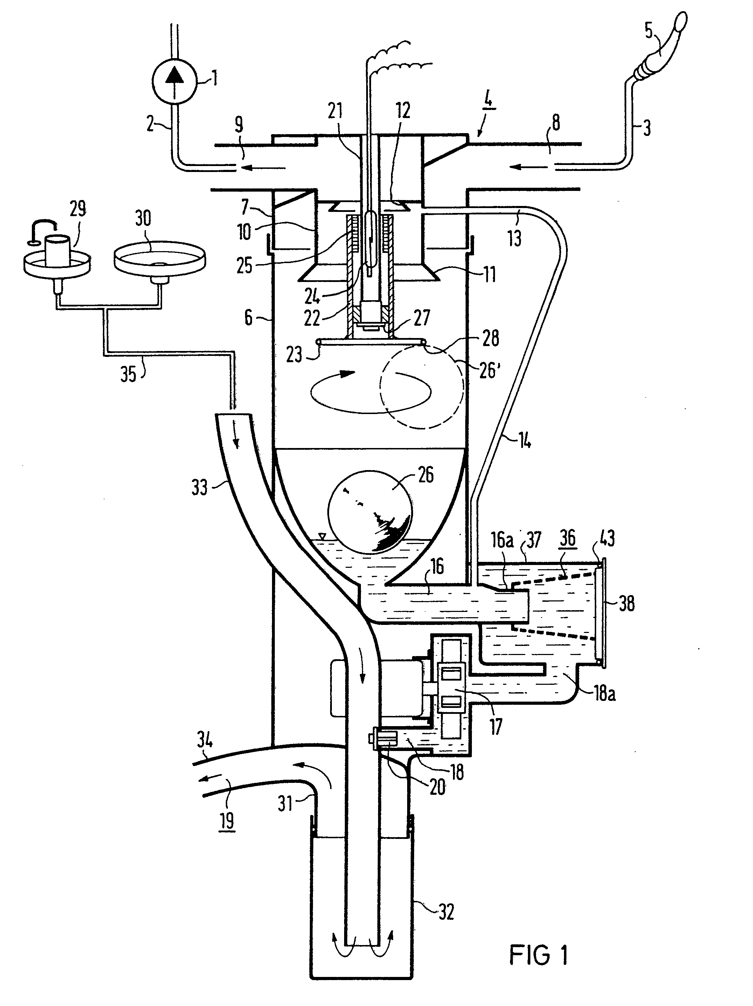

Die Fig. 1 zeigt in einer Prinzipdarstellung eine zahnärztliche Absaugeinrichtung mit einer Saugpumpe 1, an der saugseitig eine aus zwei Abschnitten 2, 3 bestehende Saugleitung angeschlossen ist, zwischen denen ein Separierbehälter 4 geschaltet ist, in dem die von einer Saugdüse 5 beispielsweise aus einem Patientenmund abgesaugten flüssigen und festen Teilchen von der Saugluft separiert werden. Bei dem Separierbehälter 4 handelt es sich um einen an sich bekannten Zyklon-Abscheider mit einem zylindrischen, nach unten hin konisch sich verjüngenden unteren Behälterteil 6 und einem abnehmbar darauf gehalterten oberen Behälterteil 7. Der obere Behälterteil 7 weist einen tangential einmündenden Einlasskanal 8 auf und einen etwa in gleicher Höhe ausmündenden Auslasskanal 9, der mit dem Saugleitungsabschnitt 2 verbunden ist. Das Behälteroberteil 7 enthält einen zentrisch angeordneten, nach unten gerichteten Stutzen 10 mit einer Umlenkkante 11 und einer Staubdruckblende 12. In Strömungsrichtung gesehen, unmittelbar vor der Staubdruckblende 12, mündet ein Anschluss 13 einer Bypassleitung 14. Der andere Anschluss der Bypassleitung 14 mündet in einen Abflusskanal 16, der gleichsam der saugseitige Kanal einer Kreiselpumpe 17 ist, deren druckseitiger Leitungskanal 18 in eine Abflussleitung 19 mündet. Im druckseitigen Leitungskanal 18 ist ferner noch ein Rückschlagventil 20 angeordnet, mit dem ein Rücksaugen von abgeflossener Flüssigkeit aus der Abflussleitung 19 verhindert wird. Dies ist erforderlich, weil die Pumpe 17 erst dann abdichtet und ihre Pumpwirkung entfaltet, wenn die Pumpe mit Flüssigkeit gefüllt ist.

Im Behälteroberteil 7 ist konzentrisch zum Stutzen 10 ein Rohr 21 angeordnet, über das teleskopartig ein zweites Rohr 22 gestülpt ist, an dessen unterem stirnseitigen Ende ein Ring 23 befestigt ist. Rohr 22 und Ring 23 dienen als Betätigungselement für ein Schaltelement 24 (Reed-Kontakt), mit dem z.B. die Saugpumpe 1 oder ein in der Saugleitung 2 angeordnetes Absperrventil ein- und ausgeschaltet werden können. Zu diesem Zweck enthält das konzentrische, zum Rohr 21 beweglich geführte Rohr 22 am oberen Ende einen ringförmig ausgebildeten, mit dem Schaltelement 24 zusammenwirkenden Permanentmagneten 25.

Mit 26 ist ein kugelförmiger Schwimm- und Schwebekörper bezeichnet, der im unteren, etwa kegelstumpfförmig auslaufenden und eiförmig ausgebauchten Behälterunterteil 6 auf der angesammelten Flüssigkeit schwimmend aufliegt und bei geringem Flüssigkeitsstand oder bei leerem Behälter von der durchströmenden Luft mitgerissen wird und dann kreiselnd um die Behälterinnenwand rotiert. Die eiförmige Ausbildung des unteren Behälterteils hat sich hierzu in Verbindung mit dem kugelförmigen Schwimm- und Schwebekörper als besonders vorteilhaft erwiesen. Bei steigendem Flüssigkeitspegel liegt die Kugel 26 schwimmend auf der Flüssigkeit auf, wobei sie sich durch die Verwirbelung der Luft ständig in Eigenrotation befindet und auch an der Behälterwand entlang rotiert.

Das Betätigungsglied 22, 23 befindet sich bei steigendem Saugbetrieb zunächst in der gezeigten Stellung, die durch einen Anschlag 27 begrenzt ist. Der Permanentmagnet 25 befindet sich in Höhe des Schaltelementes 24. Der Schaltkontakt ist in dieser Position geschlossen, der Motor der Saugpumpe 1 oder ein in der Saugleitung 2 angeordnetes Ventil aktiviert. Bei einem bestimmten Füllstand kommt die Kugel 26 an der Unterseite 28 des Ringes 23 zur Anlage (siehe gestrichelte Position 26'). Aufgrund der Grösse des Ringes 23 wird verhindert, dass die Kugel 26 in den oberen Behälterteil gelangen kann. Mit weiter ansteigendem Pegel wird das Rohr 22 angehoben, wodurch der Permanentmagnet 25 längs des Führungsrohres 21 verstellt wird. Nach einer gewissen Weglänge öffnet der Schaltkontakt, wodurch der Motor der Saugpumpe 1 abgeschaltet oder das in der Saugleitung 2 angeordnete Ventil abgesperrt wird. Während dieser Absperr-Abschaltphase ist die Kreiselpumpe 17 in Betrieb, wodurch die im Behälter angesammelte Flüssigkeit sehr rasch in den Abflusskanal 19 gedrückt wird.

Die Kugel 26 wird infolge der Luftströmung bei vorhandener Flüssigkeit ständig gedreht, wodurch vermieden wird, dass an der Kugel Feststoffteilchen haftenbleiben können. Bei leerem Behälter rotiert die Kugel infolge der tangential eingeblasenen Saugluft mit hoher Geschwindigkeit entlang der Behälterinnenwand, wodurch ein gewisser Reinigungseffekt sowohl beim Behälter als auch bei der Kugel erzielt wird.

Anstelle einer einzigen Kugel können auch mehrere Kugeln vorgesehen werden. Auch hinsichtlich der Gestaltung des bzw. der Schwimm- und Schwebekörper sind Modifikationen denkbar; jedoch hat sich die Kugelform als besonders vorteilhaft erwiesen. Modifikationen sind auch bezüglich des Ringes 23 denkbar; so kann eine gegebenenfalls mit Durchbrechungen versehene ebene Platte vorgesehen werden, die in ihren Abmessungen so dimensioniert ist, dass die Kugel 26 bei steigendem Flüssigkeitspegel nicht in den oberen Behälterteil eintreten kann; die im wesentlichen ebene Anlagefläche der Platte hat den Vorteil, dass die Kugel selbst im angedrückten Zustand an der Fläche abrollen kann, wodurch der besagte Reinigungseffekt auch bei anliegender Kugel gegeben ist.

Um die über die Saugdüse abgesaugten und auch die über die schematisiert eingezeichneten Spül- und Speieinrichtungen 29, 30 in das Abwassernetz gelangenden festen Teilchen, wie Gold, Amalgam, abfangen zu können, ist unmittelbar unterhalb des Separierbehälters 4 ein rohrförmig ausmündendes Aufnahmeteil 31 angeordnet, an dem mittels eines Schnappverschlusses ein Abscheidebehälter 32 abnehmbar gehaltert ist. Das Aufnahmeteil 31 bildet mit dem Gehäuse des Separierbehälters 4 eine Baueinheit mit angeformten Anschlussstutzen 33, 34 für einerseits die Abflussleitung 35 aus den Spül- und Speieinrichtungen 29, 30 und andererseits für die in das Abwassersystem führende Abflussleitung 19. Der Abflussleitungskanal 18 aus dem Separierbehälter 4 und der Stutzen 33 der Abwasserleitung 35 münden zentrisch zu gesamten Anordnung in einen Abflussleitungsabschnitt ein, der bis etwa in Bodennähe des Abscheidebehälters 32 eintaucht. Das Abwasser aus dem Separierbehälter 4 und den Spül- und Speieinrichtungen 29, 30 wird also zentrisch bis in Bodennähe des Behälters eingeleitet; das gegenüber den festen Teilchen leichtere Abwasser steigt nach oben und gelangt über den oberhalb des Behälterrandes angeordneten Abflussstutzen 34 in die Abwasserleitung 19. Der Abscheidebehälter 32 dient hier also gleichsam als Siphon.

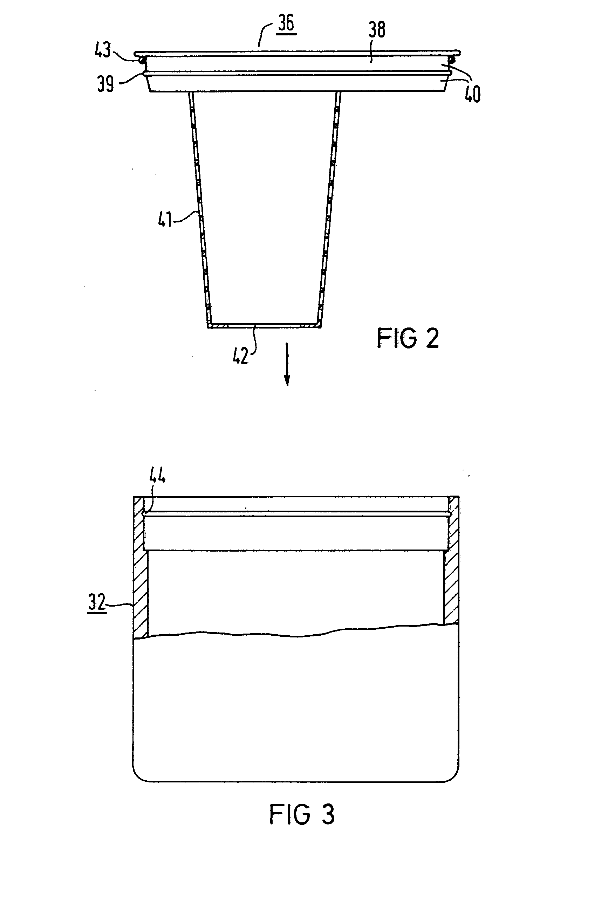

Zwischen dem saugseitigen Abwasserleitungsabschnitt 16 und dem druckseitigen Abschnitt 18 ist ein siebartiges Filter 36 in einem mit 37 bezeichneten Filtergehäuse herausnehmbar angeordnet. Der Aufbau des Filters 36 ist aus Fig. 2 zu entnehmen. Das Filter enthält einen eine Handhabe zur Entnahme des Filters bildenden Deckel 38 mit einer eine Rastnase 39 enthaltenden Anformung 40 und einem sich daran anschliessenden Filterkorb 41. Der Filterkorb 41 ist zur Handhabe 38 hin geschlossen und weist am gegenüberliegenden Ende eine Öffnung 42 auf, in die bei Einschieben des Filters in das Filtergehäuse 37 der Stutzen 16a des saugseitigen Abwasserleitungsabschnittes 16 eintaucht.

Wie aus der Darstellung in Fig. 1 ersichtlich, ist das Filter 36 waagerecht aus dem Filtergehäuse 37 entnehmbar; der Abfluss erfolgt senkrecht zum Einlaufstutzen 16a mittels eines entsprechend vorgesehenen Abflussstutzens 18a. Zur Abdichtung des Filtergehäuses ist zwischen diesem und dem Filter 36 ein Dichtring 43 vorgesehen.

Das Filter 36 dient gleichzeitig als Verschlussdeckel für den am Rohrstutzen 31 abnehmbar gehalterten Auffangbehälter 32, wozu der Filterkorb 41 so dimensioniert ist, dass er im Behälter 32 Platz hat und die Handhabe 38 mit der Anformung 40 den Innenmassen des Behälterrandes angepasst ist. Die Rastnase 39 bildet mit einer Ringnut 44 im Behälter 32 eine Schnappverbindung, die es erlaubt, die beiden Behältnisse 36 und 32 auf einfache und hygienische Weise zu einer versandfertigen Einheit zusammenzufügen. Durch die vorgeschlagenen Massnahmen können also zwei voneinander getrennt angeordnete Auffangbehältnisse auf einfache und hygienische Weise zu einer kompakten geschlossenen und sodann versandfähigen Einheit zusammengefügt werden.

## Patentansprüche

1. Zahnärztliche Absauggeinrichtung mit einem Auffangbehälter (32) für feste Teilchen, wie Gold oder Silberamalgam, der in einem in das Abwassernetz führenden Abwasserleitungsabschnitt (16, 18, 19) siphonartig angeordnet und zum Zwecke der Entnahme der dort angesammelten Teilchen lösbar gehaltert ist, dadurch gekennzeichnet, dass im Abwasserleitungsabschnitt (16, 18, 19) ein weiteres Auffangbehältnis (36) vorgesehen ist, das als Verschlussdeckel für den erstgenannten Auffangbehälter (32) ausgebildet ist, so dass beide Behältnisse (32, 36) zu einer geschlossenen versandfähigen Einheit zusammengefügt werden können.

2. Zahnärztliche Absaugeinrichtung nach Anspruch 1, dadurch gekennzeichnet, dass das weitere Auffangbehältnis (36) als siebartiges Filter ausgebildet ist, welches in an sich bekannter Weise einen etwa rohrförmigen, einseitig geschlossenen Siebkörper (41) enthält, der mit seinem freien Teil in den Abwasserleitungsabschnitt (16) eintaucht und dessen anderer, geschlossener Teil eine Handhabe (38) zur Entnahme des Filters bildet, dass der Siebkörper (41) so dimensioniert ist, dass er im erstgenannten Auffangbehälter (32) Platz findet und die Handhabe (38) einen den Abmessungen des erstgenannten Auffangbehälters (32) angepassten und mit diesem einen Verschluss (39, 44) bildenden Ansatz (40) aufweist.

3. Zahnärztliche Absaugeinrichtung nach Anspruch 1 oder 2, dadurch gekennzeichnet, dass als Verschluss ein Schnappverschluss (39, 44) vorgesehen ist.

4. Zahnärztliche Absaugeinrichtung nach Ansprüchen 2 und 3, dadurch gekennzeichnet, dass der Schnappverschluss aus einer an der Anformung (40) der Handhabe (38) angeordneten Rastnase (39) und einer dazu passenden Ringnut (44) im erstgenannten Auffangbehälter (32) besteht.

5. Zahnärztliche Absaugeinrichtung nach einem der Ansprüche 1 bis 4, dadurch gekennzeichnet, dass das Filter (36) als Vor- oder Grobsieb in den in die Abflussleitung (19) mündenden Leitungsabschnitt (16, 18) des Abwasserkanals eines Separierbehälters (4) eingebaut ist.

6. Zahnärztliche Absaugeinrichtung nach Anspruch 5, dadurch gekennzeichnet, dass das Filter (36) in einem Filtergehäuse (37) eingebaut ist, das im saugseitigen Leitungsteil (16) einer zwischen Separierbehälter (4) und einer im Abflusskanal angeordneten Pumpe (17) angeordnet ist.

7. Zahnärztliche Absaugeinrichtung nach Anspruch 6, dadurch gekennzeichnet, dass das Filter (36) im wesentlichen waagerecht entnehmbar in dem Filtergehäuse (37) eingebaut ist.

8. Zahnärztliche Absaugeinrichtung nach Anspruch 6, dadurch gekennzeichnet, dass der Filterkörper (41) an dem der Handhabe (38) entgegengesetzten Ende eine Öffnung (42) aufweist, in die im aufgesetzten Zustand ein Stutzen (16a) des saugseitigen Abschlusskanals (16) eintaucht und dass das Filtergehäuse (37) einen quer zum Zu-laufkanal (16) angeordneten Ablaufkanal (18) aufweist.

## Claims

1. Dental aspiration equipment comprising a collecting vessel (32) for solid particles, such as gold or silver amalgam, which is arranged like a siphon in a drain section (16, 18, 19) which leads into the waste water system, and which for the purpose of removing the particles which have accumulated therein, is detachably secured, characterised in that in the drain section (16, 18, 19), a further collecting vessel (36) is arranged which is designed as a cover for the first-mentioned collecting vessel (32), so that both vessels (32, 36) can be combined to form a sealed unit for dispatch.

2. Dental aspiration equipment as claimed in Claim 1, characterised in that the further collecting vessel (36) is in the form of a sieve-like filter which comprises in known manner an approximately tubular sieve body (41) sealed at one end, which is immersed in the drain section (16) at its free part and the other, closed part of which forms a grip (38) for removing the filter; that the sieve body (41) is so dimensioned that it can be positioned in the first-mentioned collecting vessel (32), and the grip (38) has an attachment (40) which is adapted to the dimensions of the first-mentioned collecting vessel (32) and forms a seal (39, 44) therewith.

3. Dental aspiration equipment as claimed in Claim 1 or Claim 2, characterised in that a snap closure (39, 44) is provided as seal.

4. Dental aspiration equipment as claimed in Claims 2 and 3, characterised in that the snap closure consists of a latch (39) which is arranged on the attachment (40) of the grip (38), and of a matching annular groove (44) in the first-mentioned collecting vessel (32).

5. Dental aspiration equipment as claimed in one of Claims 1 to 4, characterised in that the filter (36) is installed in the pipe section (16, 18) which opens into the drain pipe (19) of the waste water channel of a separating vessel (4), as a preliminary or coarse sieve.

6. Dental aspiration equipment as claimed in Claim 5, characterised in that the filter (36) is installed in a filter housing (37) which is arranged in the suction-side line part (16) of a pump (17) which is arranged between the separating vessel (4) and discharge channel.

7. Dental aspiration equipment as claimed in Claim 6, characterised in that the filter (36) is installed in the filter housing (37) so as to be essentially removable in a horizontal manner.

8. Dental aspiration equipment as claimed in Claim 6, characterised in that at the end opposite the grip (38), the filter body (41) has an opening (42) into which a connecting piece (16a) of the discharge channel (16) at the suction end is immersed in the set-up position; and that the filter housing (37) has an outlet channel (18) which is arranged transversely to the inlet channel (18).

## Revendications

1. Installation d'aspiration dentaire comportant un récipient de collecte (32) pour des particules solides, telles que de l'or ou de l'amalgame d'argent, qui est installé, à la manière d'un siphon, dans un élément (16, 18, 19) de la canalisation des eaux résiduaires, aboutissant au réseau des eaux résiduaires, et qui est fixé de façon détachable de manière à permettre le prélèvement des particules qui s'y sont rassemblées, caractérisée par le fait qu'il est prévu dans l'élément (16, 18, 19) de canalisation des eaux résiduaires un autre récipient de collecte (36) qui est agencé sous la forme d'un capot de fermeture pour le récipient de collecte (32) indiqué en premier, de sorte que les deux récipients (32, 36) peuvent être réunis pour former une unité transportable fermée.

2. Installation d'aspiration dentaire suivant la revendication 1, caractérisée par le fait que l'autre récipient de collecte (36) est réalisé sous la forme d'un filtre en forme de tamis, qui contient de façon connue en soi un corps de tamis (42) approximativement tubulaire et fermé d'un côté et dont l'extrémité libre pénètre dans l'élément (16) de la canalisation des eaux résiduaires et dont l'autre partie fermée forme une poignée (38) servant à prélever le filtre, que le corps de tamis (41) est dimensionné de telle sorte qu'il peut être logé dans le récipient de collecte (32) indiqué en premier, et que la poignée (38) comporte une partie saillante (42) adaptée aux dimensions du récipient (32) indiqué en premier et formant avec ce dernier un dispositif de fermeture (39, 44).

3. Installation d'aspiration dentaire suivant la revendication 1 ou 2, caractérisée par le fait qu'il est prévu comme dispositif de fermeture un dispositif de fermeture à encliquetage brusque (39, 44).

4. Installation d'aspiration dentaire suivant les revendications 2 et 3, caractérisée par le fait que le dispositif de fermeture à encliquetage brusque est constitué par un rebord d'encliquetage (39) disposé sur la partie saillante moulée (40) de la poignée (38) et par une rainure annulaire (44), adaptée à ce rebord d'encliquetage et ménagée dans le récipient de collecte (32) indiqué en premier.

5. Installation d'aspiration dentaire suivant l'une des revendications 1 à 4, caractérisée par le fait que le filtre (36), réalisé sous la forme d'un tamis préparatoire ou d'un tamis gros, est monté dans l'élément (16, 18), débouchant dans la canalisation d'évacuation des eaux (19), de la canalisation des eaux résiduaires d'un récipient de séparation (4).

6. Installation d'aspiration dentaire suivant la revendication 5, caractérisée par le fait que le filtre (36) est inséré dans un boîtier de filtre (37) qui est monté dans l'élément de canalisation (16) situé du côté aspiration, entre le récipient de séparation (4) et une pompe (17) montée dans la canalisation d'évacuation.

7. Installation d'aspiration dentaire suivant la revendication 6, caractérisée par le fait que le filtre (36) est monté dans le boîtier de filtre (37) de manière à pouvoir en être retiré essentiellement horizontalement.

8. Installation d'aspiration dentaire suivant la revendication 6, caractérisée par le fait que le corps de filtre (41) comporte, sur l'extrémité située à l'opposé de la poignée (38), une ouverture (42) dans laquelle pénètre, à l'état monté, une tubulure (16a) de la canalisation de terminaison (16) située du côté aspiration, et que le boîtier de filtre (37) possède une canalisation d'évacuation (18) montée transversalement par rapport à la canalisation d'admission (16).

FIG 1

FIG 2

FIG 3